# EUROPEAN PATENT SPECIFICATION

(11) **EP 3 858 459 B1**
(45) Date of publication and mention of the grant of the patent: **13.09.2023**
(21) Application number: 21153941.6
(22) Date of filing: 28.01.2021
(51) Int. Cl.: B01D 46/00, B01D 46/44, B01D 46/46

(54) **FILTRATION METHOD AND APPARATUS**
VERFAHREN UND VORRICHTUNG ZUM FILTRIEREN
PROCÉDÉ ET APPAREIL DE FILTRATION

(30) Priority: 03.02.2020 IT 202000002041
(43) Date of publication of application: 04.08.2021
(73) Proprietor: Piovan S.P.A., 30036 Santa Maria di Sala (VE) (IT)
(72) Inventor: BELLIO, Enrico, 31050 Ponzano V.to (TV) (IT)
(74) Representative: Luppi Intellectual Property S.r.l.

(56) References cited:
- EP-A1- 2 620 202
- WO-A1-91/17354
- WO-A1-2017/167666
- US-B2- 7 261 762

## Description

### Background of the invention

The invention relates to a filtration apparatus, in particular an air filtration apparatus provided with a system for controlling routine and special maintenance of the filtering medium of the apparatus.

The invention further relates to a filtration method for performing routine and special maintenance of the filtering medium.

Specifically, but not exclusively, the invention can be applied to filtration apparatuses for filtering the air that are used in treatment plants for treating plastics in incoherent state, i.e. in the form of granules and/or microgranules and/or powder and/or flakes or the like. Such treatment plants may comprise, for example, dehumidification and/or drying and/or crystallization and/or vacuum conveying and/or pressure conveying plants. Such treatment plants may be designed, in particular, to feed user machines, in particular machines for processing and transforming plastics, such as for example extrusion machines arranged to feed the extruded plastics to injection moulding and/or blow-moulding and/or compression moulding machines.

Patent publication WO 91/17354 shows a method and an apparatus for providing the residual duration of an air filter by reading the pressure loss through the filter at regular intervals of use, by approximating the speed at which the pressure loss increases and by using this approximate speed to calculate when a maximum pressure loss will be reached. **Patent publication** US 7 261 762 B2 **discloses an apparatus as in the preamble of claim 1.**

In the plastics processing industry, it is known to use a process fluid that comes into direct contact with the plastics, for example for dehumidifying, drying, crystalizing, conveying, etc. The machines used in the treatment process are protected by filtration apparatuses that retain the powder material suspended in the process fluid. Such filtration apparatuses have to be suitably maintained so as to ensure maximum efficiency thereof. These filtration apparatuses, in the simplest constructional form thereof, have a filtering cartridge inserted into a sealed container.

It is known that these filtration apparatuses are provided with differential pressure switches that, when a given vacuum value and/or pressure difference is reached, enable an electric contact to be closed and thus an electric signal to be transmitted to the control unit that is programmed to generate a resulting alarm warning and/or a maintenance signal. Using, in addition to the differential pressure switch, also a timed contacter that trips to generate an alarm signal and that in some cases can command the blocking of an operating machine is known.

Prior art solutions do not however enable precise and reliable monitoring to be performed, in real time, of the actual degree of clogging of the filtration apparatus. In particular, it has been found that, to perform appropriate and thorough monitoring of the efficiency of a filtration apparatus, it is not sufficient to detect the pressure difference, i.e. the load loss through the filter. In other words, it is desirable to determine with greater precision and reliability the real clogging and/or soiling value of the filter.

It is also desirable to establish in advance, with greater precision and reliability, when to perform cleaning of the filtration apparatus to determine appropriate programming of routine maintenance on the basis of actual cleaning needs.

It has in fact been observed that the degree of clogging and/or soiling of a filter of the process fluid of a plant for processing granules of the plastics is determined by the various conditions of use. In particular, the quantity of powder produced by or removed from the granule is modified according to hourly production, so that greater hourly production will entail greater powder production.

It is further noted that current treatment plants of plastics enable the flow of the process fluid to be modulated according to the actual work conditions with a consequent variation in the production of powder due, for example, to the variation in friction and collision that are generated in the conveying process.

The possibility of varying the conditions of use means that detecting the pressure loss through the filter is not suitable or sufficient for a precise determination of the actual cleanliness and/or clogging of the filter.

### Summary of the invention

One object of the invention is to overcome one or more of the aforesaid limits and drawbacks of the prior art.

One object of the invention is to provide a filtration apparatus with a control system that enables the actual degree of clogging and/or soiling of the apparatus to be detected in real time precisely and reliably.

One object is to manage routine and/or special maintenance of a filtration apparatus of a process fluid deterministically, with the possibility of anticipating the moment of maintenance.

One advantage is to make a filtration apparatus that is particularly suitable for filtering a process fluid used in a plant for processing plastics in incoherent state.

One advantage is to reduce routine and/or special maintenance of the filtration apparatus.

One advantage is to provide a filtration apparatus with relatively high filtration efficiency.

One advantage is to eliminate or at least significantly limit, the risk of damage, especially in the presence of high temperatures, of parts of the processing plant where the filtration apparatus works.

One advantage is to detect the actual degree of clogging and/or soiling of the filtration apparatus also if, in the course of use, the gas flow that traverses the filtration apparatus undergoes variations, for example to optimize the flow of a process fluid with respect to actual conditions of use.

One advantage is to provide a filtration apparatus that is constructionally cheap and simple and that is particularly suitable for filtering powder material suspended in a process fluid.

These objects and advantages and still others are achieved by an apparatus and/or a method according to one or more of the claims set out below.

In one embodiment, a filtration apparatus comprises fan means for generating a gas flow, a filtering medium traversed by the gas flow, first sensor means to determine a pressure loss through the filtering medium and/or second sensor means to detect a parameter indicating the power used by the fan means, third sensor means for measuring the gas flow, a database with a plurality of values of the gas flow and, associated with each value of the gas flow, a reference value of the pressure loss and/or a reference value of the aforesaid parameter indicating the energy consumption of the fan means, and electronic means configured for determining the state of cleanliness of the filtering medium by a comparison between the measured values of the pressure loss and/or of the aforesaid parameter indicating the power absorbed by the fan means, and the respective reference values of the database that are associated with the actual measured value of the gas flow.

### Brief description of the drawings

The invention can be better understood and implemented with reference to the attached drawings that illustrate some embodiments by way of non-limiting example, in which:
Figure 1 shows, schematically, an example of a plant for dehumidifying that includes a filtration apparatus made according to the present invention;
Figure 2 shows an embodiment of a database that is usable by the electronic control means of the filtration apparatus of Figure 1;
Figure 3 shows a diagram of the pressure loss ΔP through the filtering medium of the filtration apparatus of Figure 1, in function of the gas flow Q, in which the reference curve ΔPmax relating to the clogged filtering medium and the reference curve ΔPmin relating to the clean filtering medium are shown;

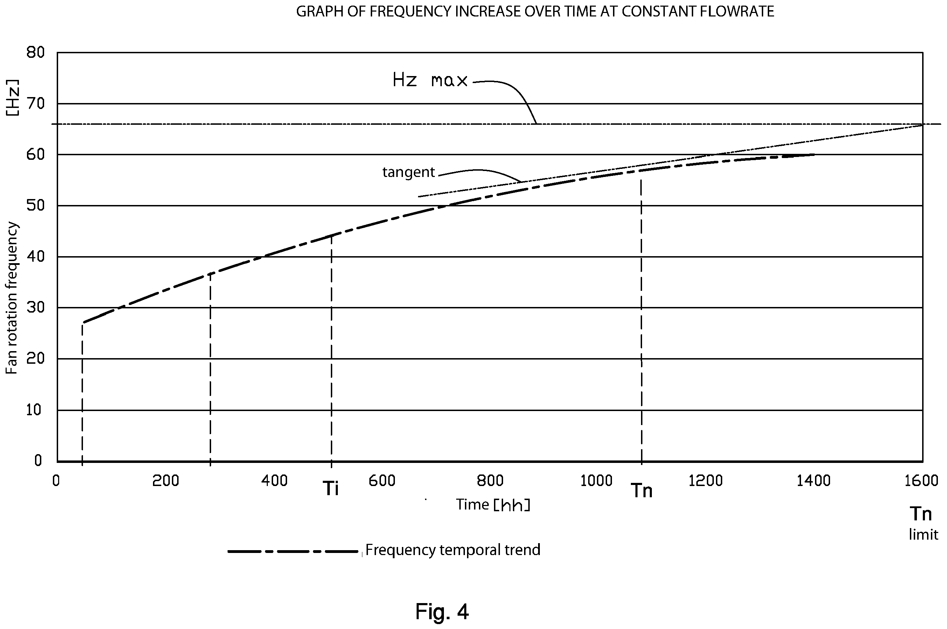

Figure 4 shows an embodiment of a clogging curve represented by the rotation frequency curve Hz measured over the time T and compared with the line that indicates the reference value Hzmax relating to the clogged filtering medium;

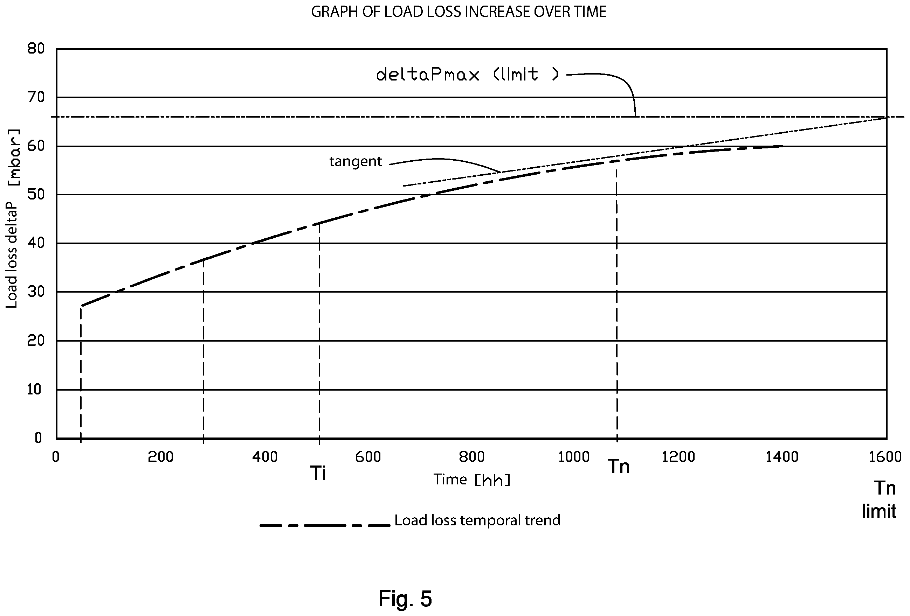

Figure 5 shows an embodiment of a clogging curve represented by the pressure difference ΔP measured over the time T and compared with the line that indicates the reference value ΔPmax relating to the clogged filtering medium;
Figure 6 is a flow diagram of an embodiment of a filtration method for performing routine and special maintenance of the filtering medium of a filtration apparatus, in particular like that of Figure 1.

### Detailed description

With reference to the aforesaid figures, overall with 1 a plant for dehumidifying the incoherent plastics has been indicated. The plant for dehumidifying 1 may comprise, in particular, at least one dehumidification apparatus 2 arranged to dehumidify and feed a dehumidified process gas (air) to at least one container (not illustrated) of the plastics. The container of the plastics may comprise, in particular, at least one dehumidification hopper for resin granules, for example a dehumidification hopper of known type.

The dehumidification apparatus 2 for dehumidifying the process gas (air) may comprise, in particular, at least two dehumidifiers arranged parallel. The dehumidification apparatus 2 for dehumidifying the process gas may comprise, in particular, molecular sieves means.

The plant for dehumidifying 1 may comprise, in particular, at least one inlet 3 for a process gas (for example the ambient air) to be filtered and dehumidified and at least one outlet 4 for the filtered and dehumidified process gas. This outlet 4 may be connected, in particular, to at least one inlet of the container (hopper) where the incoherent plastics are processed (dehumidified or dried).

The plant for dehumidifying 1 may comprise, in particular, at least one filtration apparatus 5 arranged to receive the process gas coming from the inlet 3 and to feed the filtered process gas to the dehumidification apparatus 2.

The filtration apparatus 5 may comprise, in particular, at least one filtering medium 6 to purify the process gas from suspended solid particles. The filtering medium 6 may comprise, in particular, at least one contaminated side and at least one purified side. The filtering medium 6 may comprise, in particular, at least one filter of the cartridge type, or a flat filter, or tapered filter or filter of another type. The filtering medium 6 may be made, in particular, of a cellulose-based material (paper) and/or of polyester and/or of polypropylene and/or of polyurethane and/or of cotton and/or of sponge and/or of glass fibre and/or of nonwoven fabric and/or of metal mesh, etc.

The filtration apparatus 5 may comprise, in particular, fan means 7 configured to generate a gas flow through the filtering medium 6 from the contaminated side to the purified side. The fan means 7 may comprise, in particular, at least one device configured to move gaseous currents and be driven by at least one motor (for example an electric motor). The fan means 7 may comprise, in particular, at least one device provided with rotating blades. The fan means 7 may comprise, in particular, at least one rotating member. The fan means 7 may comprise, in particular, at least one fan. The fan means 7 may be arranged, in particular, downstream of the filtering medium 6 ("downstream" with reference to the direction of the gas flow during filtration from the contaminated side to the purified side). The fan means 7 may be arranged, in particular, between the filtering medium 6 and the dehumidification apparatus 2 for dehumidifying the process gas.

The filtration apparatus 5 may comprise, in particular, first sensor means 8 arranged to measure at least one pressure difference ΔP, or pressure loss, between the purified side and the contaminated side of the filtering medium 6. The pressure difference ΔP may be determined, in particular, by measuring pressure both on the contaminated side, and on the purified side, calculating for example the difference between the two measured pressures, upstream and downstream of the filtering medium 6. The pressure difference ΔP may be determined by measuring the pressure only on the contaminated side, downstream of the filtering medium 6, considering that the pressure on the purified side, upstream of the filtering medium 6, is a known pressure, for example equal to ambient pressure. The first sensor means 8 may comprise, in particular, at least one pressure transducer arranged on the purified side. The first sensor means 8 may comprise, in particular, at least one pressure transducer arranged on the contaminated side. The first sensor means 8 may comprise, in particular, at least one differential pressure switch.

The filtration apparatus 5 may comprise, in particular, second sensor means 9 arranged to measure at least one parameter indicating a power used by the fan means 7 to generate the gas flow through the filtering medium 6. The second sensor means 9 may comprise, in particular, means for measuring the electric power absorbed by an electric motor that drives the fan means 7 to generate the gas flow through the filtering medium 6. The second sensor means 9 may comprise, as in the specific embodiment, means for measuring the rotation frequency Hz (or the rotation speed) of at least one rotating operating member of the fan means 7. The second sensor means 9 may comprise, in particular, a rotation frequency transducer.

The filtration apparatus 5 may comprise, in particular, third sensor means 10 arranged to measure at least one gas flow Q generated through the filtering medium 6 by the fan means 7. The third sensor means 10 may comprise, in particular, at least one flow meter (for example a meter of mass and/or volumetric flowrate for gas). The third sensor means 10 may comprise, in particular, means for measuring the speed of a gas flow. The third sensor means 10 may comprise, in particular, sensor means of known type used for measuring the gas flow in a conduit. The third sensor means 10 may be arranged, in particular, upstream or downstream of the fan means 7 and/or upstream or downstream of the filtering medium 6.

The filtration apparatus 5 may comprise, in particular, at least one memory containing at least one database 11 that includes n values Q1, Q2, Q3, ..., Qi, ..., Qn of the flow Q of gas through the filtering medium 6, with n ≥ 2, or n ≥ 4, or n ≥ 6, or n ≥ 8. The database 11 may include, in particular, associated with each value Q1, Q2, Q3, ..., Qi, ..., Qn of the gas flow, a first reference value ΔP' of the pressure difference ΔP between the purified side and the contaminated side through the filtering medium 6. The database 11 may include, in particular, a number n of first reference values ΔP'1, ΔP'2, ΔP'3, ..., ΔP'i, ..., ΔP'n, one for each value Q1, Q2. Q3, ..., Qi, ..., Qn.

The database 11 may include, in particular, associated with each value of the flow Q1, Q2, Q3, ..., Qi, ..., Qn of gas, a second reference value Hz' of the aforesaid parameter (in this case the rotation frequency of a rotating member) indicating power used by the fan means 7. The database 11 may include, in particular, a number n of second reference values Hz'1, Hz'2, Hz'3, ..., Hz'i, ..., Hz'n, one for each value Q1, Q2. Q3, ..., Qi, ..., Qn.

The aforesaid first reference values ΔP'1, ΔP'2, ..., ΔP'n, just as the aforesaid second reference values Hz'1, Hz'2, ..., Hz'n, are reference values that may represent, for example, a situation of clean, or new, filtering medium 6, depending on the respective value Q1, Q2, ..., Qn, of the flow Q of gas through the filtering medium 6. In other embodiments, it is possible to use, in addition to or in replacement of reference values (first values referring to ΔP and/or second values referring to Hz) corresponding to a situation of clean, or new, filtering medium 6, of the further reference values (first values referring to ΔP and/or second values referring to Hz) corresponding to a different situation, for example a situation of clogged, to be cleaned or to be replaced or at least partially clogged filtering medium 6.

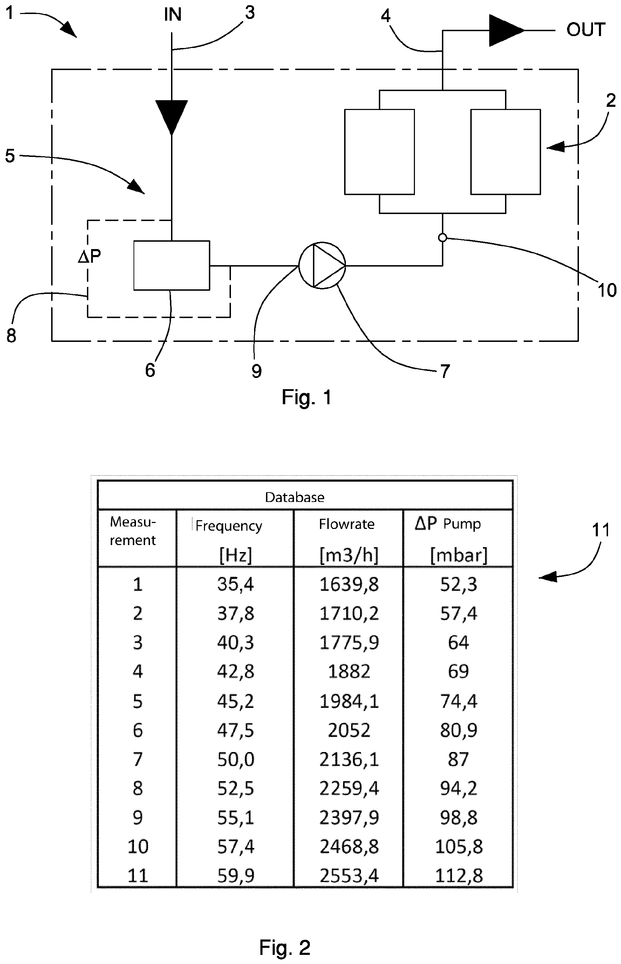

The database 11 may be, in particular, specific to each type of filtering medium. The database 11 may be, in particular, constructed empirically. Figure 2 shows an embodiment of a database 11 constructed empirically for a determined type of filtering medium or of filtration apparatus and stored in an electronic memory, containing exemplifying data on a situation of clean filtering medium.

The filtration apparatus 5 may comprise, in particular, programmable electronic control means connected to the aforesaid memory with the database 11.

The electronic control means may be configured, in particular, to perform the operation of receiving the measured values from the first sensor means 8 (pressure difference ΔP) and/or from the second sensor means 9 (rotation frequency Hz) and/or from the third sensor means 11 (flow of the gas Q).

The electronic control means may be configured, in particular, to perform the operation of associating a first reference value ΔP' of the pressure difference or loss with the value of the current gas flow Q measured by the third sensor means 10. In practice, if the value of the measured gas flow is equal to Qi, the corresponding value ΔP'i of the pressure difference as shown by the database 11 is associated.

The electronic control means may be configured, in particular, to perform the operation of associating a second reference value Hz' of the rotation frequency with the value of the current gas flow Q measured by the third sensor means 10. In practice, if the value of the measured gas flow is equal to Qi, the corresponding value Hz'i of the rotation frequency is associated as shown by the database 11.

The electronic control means may be configured, in particular, to perform at least one first comparison between the value of the pressure difference ΔP actually measured by the first sensor means 8 and the aforesaid first reference value ΔP'i corresponding, on the basis of the database 11, to the value of the measured gas flow Qi.

The electronic control means may be configured, in particular, to perform at least one second comparison between the value of the parameter (rotation frequency Hz) indicating the power used by the fan means 7 and actually measured by the second sensor means 9 with the second reference value Hz'i corresponding, on the basis of the database 11, to the value of the measured gas flow Qi.

The electronic control means may be configured, in particular, to issue a signal indicating the status of the filtering medium 6 on the basis of the first comparison and/or on the base of the second comparison.

The issued signal may comprise, in particular, a signal indicating cleaning to be performed for the filtering medium 6 if the aforesaid measured value of the parameter (rotation frequency Hz) indicating the power used by the fan means is above the second reference value Hz'i or is above a value that is calculable on the basis of the second reference value Hz'i.

The issued signal may comprise, in particular, a signal indicating cleaning to be performed for the filtering medium 6 if the aforesaid measured value of the pressure difference ΔP is greater than the first reference value ΔP'i or is greater that a value calculable from the first reference value ΔP'i.

It is possible, for example, to establish an acceptability criterion that is such that if the actually measured rotation frequency Hz of the fan means 7 is greater than a preset percentage K (where K may be a value settable by an operator and insertable in the electronic memory) with respect to the second reference value Hz'i, i.e. Hz > (1 + K) * Hz'i, then the control means issues a signal indicating the need to clean the filtering medium 6. If, merely by way of example, K = 15%, then if Hz > 1.15 * Hz'i, the filtering medium has to be cleaned, if on the other hand Hz ≤ 1.15 * Hz', the filtering medium 6 does not yet have to be cleaned and can continue to work. Another criterion could comprise, for example, calculating whether Hz > Hz'i + ΔK, the filtering medium has to be cleaned, where ΔK is a preset safety value of the maximum permitted increase with respect to the second reference value Hz'i.

Similar criteria may be used with reference to the pressure difference ΔP, or pressure loss, or load loss, (i.e. evaluating whether ΔP > (1 + K) * ΔP'i and/or whether ΔP > ΔP'i + ΔK), in addition to or in replacement of criteria referring to the rotation frequency Hz.

The electronic control means may be configured, in particular, to receive the historic data of the parameter (rotation frequency Hz) indicating the power used, i.e. the data measured periodically by the second sensor means 9 during use of the filtration apparatus 5, and to enter the aforesaid historic data into the memory.

The electronic control means may be configured, in particular, to calculate, on the basis of at least one part of the aforesaid historic data, a set time in which the value of the parameter (rotation frequency Hz) indicating the power used will be the same as the second reference value Hz'i or a value calculable by said second reference value Hz'i (for example same as (1 + K) ^{∗} Hz'i or to Hz'i + ΔK). This calculation may be performed, in particular, if the aforesaid measured value of the parameter (rotation frequency Hz) indicating the power used is less than the second reference value Hz'i or a value calculable by the second reference value Hz'i.

The electronic control means may be configured, in particular, to receive periodically the data records on the pressure difference ΔP measured by the first sensor means 8 during use of the filtration apparatus 5 and to enter the aforesaid historic data into the memory.

The electronic control means may be configured, in particular, to calculate, on the basis of at least one part of the aforesaid historic data, a set time in which the value of the pressure difference ΔP will be the same as the first reference value ΔP'i or as a value calculable from the first reference value ΔP'i (for example the same as (1 + K) * ΔP'i or as ΔP'i + ΔK). This calculation may be performed, in particular, if the aforesaid measured value of the pressure difference ΔP is less than the first reference value ΔP'i or than a value calculable from the first reference value ΔP'i.

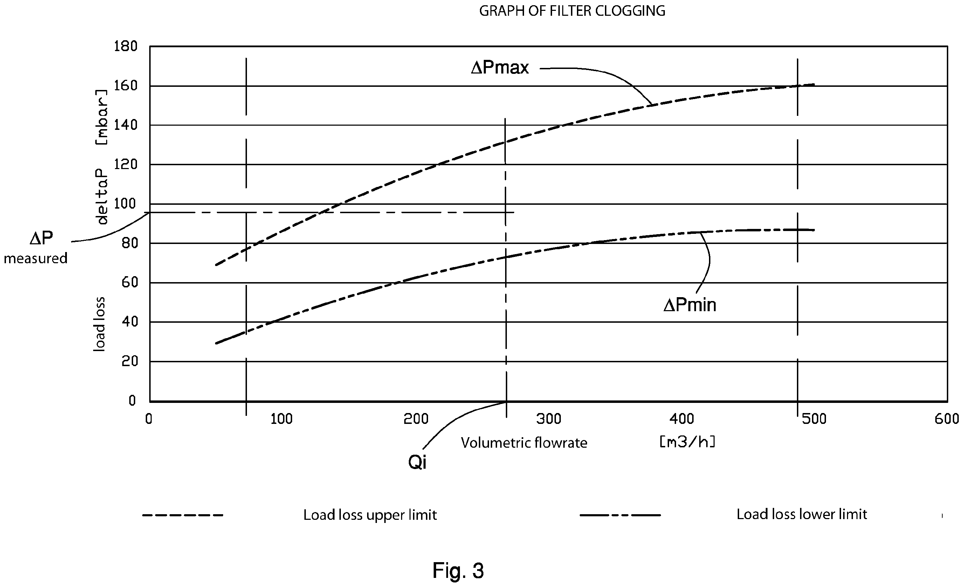

The memory may contain, in particular, associated with each gas flow value Q1, Q2, ..., Qi, ..., Qn, a maximum value ΔPmax1, ΔPmax2, ..., ΔPmaxi, ..., ΔPmaxn, or clogged filter value, and a minimum value ΔPmin1, ΔPmin2, ..., ΔPmini, ..., ΔPminn, or clean filter value, of the pressure difference ΔP between the purified side and contaminated side of the filtering medium 6. The memory may contain, in particular, a table with various values of Q and the corresponding values of ΔPmax and ΔPmin, or may contain a graph of ΔP in function of Q, as in the example of Figure 3, which has the two curves relating to ΔPmax and ΔPmin. This content database of the memory may be obtained empirically and may be specific to each type of filtration apparatus 5 and/or filtering medium 6.

The control means may be configured, in particular, to compare the value of the pressure difference ΔP, measured by the first sensor means 8 at the value of the flow Qi, with the aforesaid maximum value ΔPmaxi and with the aforesaid minimum value ΔPmini, where the maximum value ΔPmaxi and the minimum value ΔPmini are the values contained in the memory and correspond to the actual gas flow value Qi measured by the third sensor means 10.

The control means may be configured, in particular, to determine, on the basis of at least one of the aforesaid comparisons, or on the basis of an analysis of both the comparisons, a set time in which the value of the pressure difference ΔP will be the same as or near the maximum value ΔPmaxi. The set time may be, for example, determined on the basis of an empirically preset criterion or on the basis of a preset calculation that takes account of the measured value ΔP and of the maximum ΔPmaxi and minimum ΔPmini values.

As said, the memory may contain, in particular, a table with the various values of Q and the corresponding values of ΔPmax and ΔPmin, or may contain a graph of ΔP in function of Q like that of Figure 3 which has the two curves relating to ΔPmax and ΔPmin.

The memory may contain, in particular, associated with each gas flow value Q, a maximum value Hzmax, or clogged filter value, and a minimum value Hzmin, or clean filter value, of the parameter (rotation frequency Hz) indicating power used by the fan means 7.

The memory may contain, in particular, a table with the various values of Q and the corresponding values of Hzmax and Hzmin, or may contain a graph of Hz in function of Q (similar to that of Figure 3 relating to ΔP) that has two curves relating to Hzmax and Hzmin. The content database of the memory may be obtained empirically and may be specific to each type of filtration apparatus 5 and/or of filtering medium 6.

The control means may be configured, in particular, to compare the value Hz (indicating the power used) measured by the second sensor means 9 with the aforesaid maximum value Hzmaxi and/or with the aforesaid minimum value Hzmini (corresponding to the actual gas flow Qi) and determine, on the basis of at least one of the comparisons and/or on the basis of an analysis of both the comparisons, a set time in which the value Hz (indicating the power used) will be the same as or near the maximum value Hzmax. The set time may be, for example, determined on the basis of an empirically preset criterion or on the basis of a preset calculation that takes account of the measured value Hz and of the maximum Hzmaxi and minimum Hzmini values.

Considering, by way of example, the filtration apparatus of Figure 1, the electronic control means may proceed in the following manner. It is possible to determine, by the signal generated by the first sensor means 8 (at least one pressure transducer) the real load loss present in the filtering medium 6. By the signal generated by the second sensor means 9, the rotation frequency Hz of the rotating member of the fan means 7 is known that generates the air flow. By the signal generated by the third sensor means 10, the actual flowrate generated in the circuit by the fan means 7 is known.

It is thus possible to interpolate the aforesaid data measured with the aforesaid data stored in a previously constructed database, which are data relating, for example, to the conditions of clean filtering medium 6 and/or to the conditions of clogged filtering medium 6. In this manner, it is possible to observe the actual status of the filtering medium 6, knowing the load loss through the filtering medium 6 (and/or the power used by the fan means 7) and the actual flowrate of the gas that passes through the filtering medium 6, and comparing the actual load loss (and/or this power actually used by the fan means 7) with at least one reference value determined previously for that type of filter (for example in a situation of new and clean filter and/or clogged filter and filter to be cleaned or replaced) and for that set flowrate of the gas through the filtering medium 6.

As said, it is possible to establish an acceptability criterion of the situation of the filtering medium 6 (filter to be cleaned and/or replaced or filter not yet to be cleaned and/or replaced) on the basis of the aforesaid comparison of the load loss and/or of the power used, for example a criterion defined empirically, or a criterion that uses a mathematical formula or in yet another manner.

Similarly, it is possible to observe the actual status of the filtering medium 6, by knowing the rotation frequency of the fan means 7 and the actual flowrate of the gas that passes through the filtering medium 6, and by comparing this actual rotation frequency with at least one previously determined reference rotation frequency for that type of filter (for example in a situation of new and clean filter and/or clogged filter and filter to be cleaned or replaced) and for the determined flowrate of the gas through the filtering medium.

It is possible to establish an acceptability criterion of the situation of the filtering medium (filter to be cleaned and/or replaced or filter not yet to be cleaned and/or replaced) on the basis of the aforesaid comparison of the rotation frequency, for example a criterion defined empirically, or a criterion that uses a mathematical formula or in yet another manner.

As said, it is possible to adopt a criterion on the basis of the load loss, a criterion on the basis of the power used, or a criterion that takes account of both the load loss and the power used, for example by reporting the need for cleaning if at least one of the two criteria identifies a critical situation.

If, on the basis of the adopted criterion, the filtering medium does not yet have to be cleaned, it is possible to analyze the record of the data stored during use of the filtration apparatus 5 to determine when the filtering medium 6 will actually reach the clogged condition in which it has to be cleaned. In this manner, it is possible to determine the period of time missing until the next maintenance.

If, during normal operation of the filtration apparatus 5, the conditions of use (for example the hourly production of the material to be processed) vary with a certain frequency, as a consequence there will be a corresponding variation in the formation of powder. Also in this situation, the control means will be able to update in real time the state of maintenance of the filtering medium, enabling the operator to intervene promptly.

If, for example, the plant for dehumidifying resin granules works for a week at minimum potential (minimum hourly production), the control means of the system may schedule the next maintenance for within X days. If, at a certain point, the dehumidifying plant starts to work at maximum potential (maximum hourly potential), the control means will show the date of the next intervention in Y days, with Y < < X.

We have already seen that Figure 3 shows, by way of example, a graph with the curves ΔPmax (clogged filter) and ΔPmin (clean filter) in function of the flowrate Q. These characteristic curves of the operation of the filtration apparatus are stored previously in the memory. The effective load loss ΔP may be analyzed on the basis of the aforesaid graph. An identical graph may be used also in relation to the parameter (for example the rotation frequency Hz) indicating the power used by the fan means 7.

As said, the curve ΔPmax may be plotted by laboratory test where the load loss or pressure difference ΔP in the clogged filtering medium is determined at various values of the air flowrate. The curve ΔPmin may be plotted by laboratory test where the load loss or pressure difference ΔP is determined in the clean or new filtering medium at various values of the air flowrate.

If the value of the measured load loss and/or pressure difference ΔP is greater than ΔPmaxi, i.e. than the maximum difference permitted for the specific application at the actual gas flow Qi, the control means generates a maintenance alarm (cleaning and/or replacement) of the filtering medium.

If the value of the measured load loss and/or pressure difference ΔP is greater than and/or the same as ΔPmaxi, it is possible to analyze the record of the data measured previously to establish in advance within how much time the filtering medium 6 will reach the operation limit condition.

It is possible, for example, to measure the rotation frequency Hz of the gas flow generator, knowing the actual value of the gas flow Qi, thus determining a work point in a graph of Hz in function of Q. By interrogating the database inserted into the management memory, it is possible to determine the frequency value Hz'i corresponding to the flowrate Qi in the clean and/or replaced and/or new filter condition. A criterion for determining actual clogging of the filter, and consequently predicting the next maintenance, could comprise, in particular, calculating the difference Hz - Hz'i between the rotation frequency of the generator of the gas flow in the current operating condition and in the initial condition and using this difference, for example by comparing the difference with empirical data.

A predictive calculation is further possible of the next maintenance on the basis of the temporal clogging curve of the filtering medium, i.e. a curve of the actual value ΔP, and/or of the actual value Hz, in function of the time. Interpolating the measured points enables the clogging curve to be determined and thus the tangent of the clogging curve to be determined, for example in the last measured point. The tangent that is thus determined will intersect the line that indicates the value ΔPmax or Hzmax in an intersection point corresponding to the set time for the next maintenance.

This enables the operator to schedule the maintenance intervention and to coordinate and organize this task together with other programmed machine stops, permitting significant time and money savings. It is possible to monitor the tilt of the tangent in relation to the clogging curve, which enables the data of the future maintenance to be corrected and updated continuously.

It is possible, as has been seen, to characterize the filtration apparatus by a sort of "mapping" of the work field (see embodiment of Figure 3). This characterization by "mapping" can depend on various factors, such for example the dimensions of the filtering medium, on the constructional geometry of the filtering medium, on the materials used, on the degree of filtrations, on the number of filtering units used, on the dimensions and/or the geometry of the lodging that hosts the filtering medium, on the possible presence of deflectors, on humidity and/or temperature of the process fluid, etc.

It is further possible to run a check of the record stored in the memory by a comparison of the data relating to pressure loss, and/or to the power used to generate the gas flow, before and after each maintenance task.

It is further possible to report when the filtering medium has to be replaced, because it is no longer able to ensure filtration performance, in particular taking account of the number of cleaning and/or maintenance tasks.

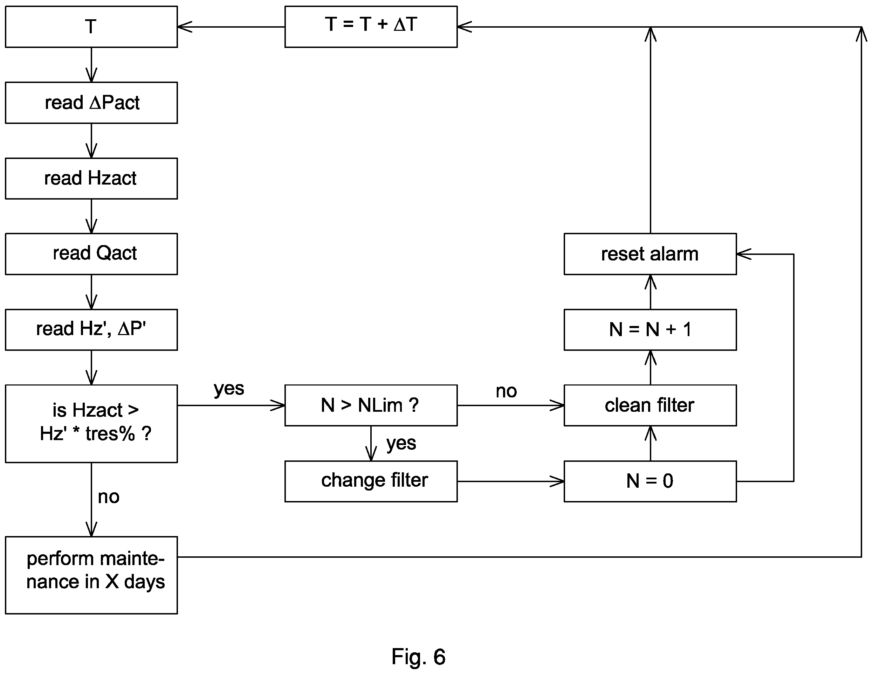

Figure 6 shows a flow diagram for representing an example of a filtration method, in particular for controlling the maintenance of a filtration apparatus as described above. A legend for Figure 6 is shown below:
T = time contacter;
ΔPact = pressure variation in the filter determined by a pressure transducer;
Hzact = real detected value of the operating rotation frequency of the fan means;
Qact = real detected value of the air flowrate through the filtering medium;
Hz' = value stored in the database of the rotation frequency, relating to the clean filter condition, at the current air flowrate;
ΔP' = value stored in the database of the pressure loss in the filter, relating to the clean filter value condition, at the current air flowrate;
tres% = preset threshold limit value to establish whether or not the filter is clogged;
N = filter cleanliness counter;
NLim = maximum permitted number of cleanings of the filter, preset (settable) value above which the filter has to be replaced.

The method shown schematically in Figure 6 measures the actual ΔPact of the filter, determines the actual air flowrate Qact, detects the actual rotation frequency Hzact of the fan motor. On the basis of the table of the stored data Hz', Q, ΔP' relating to the clean filter, the actual frequency value Hzact is compared with the datum Hz' with a clean filter at the same flowrate Qact (the same thing may be done with ΔPact and ΔP'). If the value Hzact is greater than 15% (value merely for the sake of example of tres%) of Hz', the instruction to clean the filter is supplied. If on the other hand the value Hzact is ≤ 15% of Hz', the system interrogates the record of the frequency data to check the clogging trend of the filter and determines preventively the moment in which a maintenance task has to be performed (for example as disclosed previously). After a (programmable) defined number NLim of cleanings, the operator is instructed to replace the filter. If the system has reached the maximum pressure loss value ΔPmax in the filter, the system gives the operator the instruction to clean the filter even if Hzact is ≤ 15% of Hz'. Each time the filter is cleaned the alarm is reset. If the alarm is ignored, the system can intervene, for example by reporting a critical situation or by a control signal for an actuator.

## Claims

1. Filtration apparatus (5) comprising:
- at least one filter medium (6) for purifying a gas from suspended solid particles, said filter medium (6) comprising at least one contaminated side and at least one purified side;
- fan means (7) configured to generate a gas flow through said filter medium (6);
- first sensor means (8) for determining at least one pressure difference (ΔP) between said purified side and said contaminated side, and/or second sensor means (9) for determining at least one parameter (Hz) indicative of a power used by said fan means (7) to generate the gas flow through said filter medium (6);
- third sensor means (10) for determining at least one gas flow (Q) generated through said filter medium (6) by said fan means (7);
**characterized by comprising:**
- at least one memory containing at least one database (11) containing a plurality of gas flow values through said filter medium (6) and, associated with each gas flow value, at least one first reference value (ΔP') of said pressure difference and/or at least one second reference value (Hz') of said parameter;
- electronic control means connected to said database (11) and configured to perform the following operations:
* receiving measured values from said first and/or second and third sensor means (8; 9; 10);
* associating the gas flow value (Q) determined by said third sensor means (10) to a first reference value (ΔP') and/or to a second reference value (Hz') according to said database (11);
* making at least one first comparison between the value of the pressure difference (ΔP) determined by said first sensor means (8) and said first reference value (ΔP') and/or at least one second comparison between the value of the parameter (Hz) determined by said second sensor means (9) and said second reference value (Hz'),
* emitting a signal indicating the state of said filter medium (6) on the basis of said first comparison and/or said second comparison.

2. Apparatus according to claim 1, wherein said operation of emitting a signal comprises emitting a signal indicative of a cleaning to be performed for said filter medium (6) if said measured value of the parameter (Hz) is higher than said second reference value (Hz') or to a value calculable from said second reference value (Hz').

3. Apparatus according to claim 2, wherein said control means is configured to receive and store the historical data of the parameter (Hz) measured by said second sensor means (9) during use, and, if said measured value of the parameter (Hz) is lower than said second reference value (Hz') or a value calculable from said second reference value (Hz'), to perform the operation of calculating, on the basis of at least a part of said historical data, an expected time in which the parameter value (Hz) will be equal to said second reference value (Hz') or to a value calculable from said second reference value (Hz').

4. Apparatus according to any one of the preceding claims, wherein said operation of emitting a signal comprises emitting a signal indicative of a cleaning to be performed for said filter medium (6) if said measured value of the pressure difference (ΔP) is greater than said first reference value (ΔP') or to a value calculable from said first reference value (ΔP').

5. Apparatus according to claim 4, wherein said control means is configured to receive and store historical data of the pressure difference (ΔP) periodically measured by said first sensor means (8) during use, and, if said measured value of the pressure difference (ΔP) is lower than said first reference value (ΔP') or a value calculable from said first reference value (ΔP'), to perform the operation of calculating, based on at least a part of said historical data, an expected time in which said pressure difference value (ΔP) will be equal to said first reference value (ΔP') or to a value calculable from said first reference value (ΔP').

6. Apparatus according to any one of the preceding claims, wherein said memory contains, associated with each gas flow value, a maximum value (ΔPmax), or clogged filter value, and a minimum value (ΔPmin), or clean filter value, of the pressure difference between said purified side and said contaminated side, said control means being configured to perform the operations of comparing the value of the pressure difference (ΔP) determined by said first sensor means (8) with said maximum value (ΔPmax) and with said minimum value (ΔPmin), and to determine, based on said comparison, an expected time in which said value of the pressure difference (ΔPmax) will be equal to or close to said maximum value (ΔPmax).

7. Apparatus according to any one of the preceding claims, wherein said memory contains, associated with each gas flow value, a maximum value (Hzmax), or clogged filter value, and a minimum value (Hzmin), or clean filter value, of the parameter indicating the power used by said fan means (7), said control means being configured to perform the operations of comparing the value of the parameter (Hz) determined by said second sensor means (9) with said maximum value (Hzmax) and with said minimum value (Hzmin) and to determine, based on said comparison, an expected time in which said value of the parameter (Hz) will be equal to or close to said maximum value (Hzmax).

8. Apparatus according to any one of the preceding claims, wherein:
- said first sensor means (8) comprises at least one pressure transducer arranged on said purified side and/or at least one pressure transducer arranged on said contaminated side; and/or
- said second sensor means (9) comprises means for measuring the power used by said fan means (7) and/or the frequency (Hz) or the rotation speed of a rotating operating member of said fan means (7); and/or
- said third sensor means (10) comprises at least one flow meter and/or means for measuring the speed of a gas flow.

9. Plant for dehumidifying incoherent plastics, comprising at least one dehumidification apparatus (2) arranged to dehumidify a process gas and to feed the dehumidified process gas to at least one container where the incoherent plastics is dehumidified, and at least one filtration apparatus (5) arranged to feed a filtered process gas to said dehumidification apparatus (2), **characterized in that** the filtration apparatus (5) is made according to any one of the preceding claims.

10. Filtration method comprising the steps of:
- generating a gas flow through a filter medium (6) from a contaminated side to a purified side by fan means (7);
- measuring at least one pressure difference (ΔP) between said purified side and said contaminated side and/or measuring at least one parameter (Hz) indicative of a power used by said fan means (7) to generate the gas flow;
- measuring at least one gas flow (Q) generated by said fan means (7);
- providing a plurality of values of the gas flow through said filter medium (6) and, associated with each value of the gas flow, at least one first reference value of the pressure difference between said purified side and said contaminated side and/or at least one second reference value of the parameter indicating the power used by said fan means (7);
- associating a first reference value (ΔP'i) and/or a second reference value (Hz'i) to the measured value of the gas flow (Qi);
- performing at least one first comparison between the value of the measured pressure difference (ΔP) and said first reference value (ΔP'i) and/or at least one second comparison between the value of the measured parameter (Hz) and said second reference value (Hz');
- emitting a signal indicating the state of said filter medium (6) on the basis of said first comparison and/or said second comparison.

11. Method according to claim 10, wherein said step of emitting a signal comprises emitting a signal indicative of a cleaning to be performed for said filter medium (6) if said measured value of the parameter (Hz) is higher than said second reference value (Hz') or to a value calculable from said second reference value (Hz').

12. Method according to claim 10 or 11, comprising the steps of receiving the historical data of the parameter (Hz) periodically measured during the use of said filter medium (6), storing said historical data and, if said measured value of the parameter (Hz) is less than said second reference value (Hz') or a value calculable from said second reference value (Hz'), calculating, based on at least a part of said historical data, an expected time in which said parameter (Hz) will be equal to said second reference value (Hz') or to a value calculable from said second reference value (Hz').

13. Method according to any one of claims 10 to 12, wherein said step of emitting a signal comprises emitting a signal indicative of a cleaning to be carried out for said filter medium (6) if said measured value of the pressure difference (ΔP) is higher than said first reference value (ΔP') or to a value calculable from said first reference value (ΔP').

14. Method according to any one of claims 10 to 13, comprising the steps of receiving the historical data of the pressure difference (ΔP) measured periodically during the use of said filter medium (6), storing said historical data and, if said measured value of the pressure difference (ΔP) is less than said first reference value (ΔP') or a value calculable from said first reference value (ΔP'), calculating, based on at least a part of said historical data, an expected time in which said difference value pressure (ΔP) will be equal to said first reference value (ΔP') or to a value calculable from said first reference value (ΔP').

## Patentansprüche

1. Filtrationsvorrichtung (5), die umfasst:
- mindestens ein Filtermedium (6) zum Reinigen eines Gases von suspendierten Feststoffpartikeln, wobei das Filtermedium (6) mindestens eine verunreinigte Seite und mindestens eine gereinigte Seite umfasst;
- eine Gebläseeinrichtung (7), die dazu eingerichtet ist, eine Gasströmung durch das Filtermedium (6) hindurch zu erzeugen;
- eine erste Sensoreinrichtung (8) zum Bestimmen mindestens einer Druckdifferenz (ΔP) zwischen der gereinigten Seite und der verunreinigten Seite, und/oder eine zweite Sensoreinrichtung (9) zum Bestimmen mindestens eines Parameters (Hz), der eine Leistung angibt, die durch die Gebläseeinrichtung (7) verwendet wird, um die Gasströmung durch das Filtermedium (6) hindurch zu erzeugen;
- eine dritte Sensoreinrichtung (10) zum Bestimmen mindestens einer Gasströmung (Q), die durch die Gebläseeinrichtung (7) durch das Filtermedium (6) hindurch erzeugt wird;
**dadurch gekennzeichnet, dass** sie umfasst:
- mindestens einen Speicher, der mindestens eine Datenbank (11) enthält, die eine Vielzahl von Gasströmungswerten durch das Filtermedium (6) hindurch und jedem Gasströmungswert zugeordnet mindestens einen ersten Referenzwert (ΔP') der Druckdifferenz und/oder mindestens einen zweiten Referenzwert (Hz') des Parameters enthält;
- eine elektronische Steuereinrichtung, die mit der Datenbank (11) verbunden ist und dazu eingerichtet ist, die folgenden Operationen durchzuführen:
* Empfangen von gemessenen Werten von der ersten und/oder der zweiten und/oder der dritten Sensoreinrichtung (8; 9; 10);
* Zuordnen des Gasströmungswerts (Q), der durch die dritte Sensoreinrichtung (10) bestimmt wird, zu einem ersten Referenzwert (ΔP') und/oder zu einem zweiten Referenzwert (Hz') gemäß der Datenbank (11);
* Durchführen mindestens eines ersten Vergleichs zwischen dem Wert der Druckdifferenz (ΔP), die durch die erste Sensoreinrichtung (8) bestimmt wird, und dem ersten Referenzwert (ΔP') und/oder mindestens eines zweiten Vergleichs zwischen dem Wert des Parameters (Hz), der durch die zweite Sensoreinrichtung (9) bestimmt wird, und dem zweiten Referenzwert (Hz'),
* Emittieren eines Signals, das den Zustand des Filtermediums (6) angibt, auf der Basis des ersten Vergleichs und/oder des zweiten Vergleichs.

2. Vorrichtung nach Anspruch 1, wobei die Operation des Emittierens eines Signals das Emittieren eines Signals, das eine für das Filtermedium (6) durchzuführende Reinigung angibt, wenn der gemessene Wert des Parameters (Hz) höher ist als der zweite Referenzwert (Hz') oder ein Wert, der aus dem zweiten Referenzwert (Hz') berechenbar ist, umfasst.

3. Vorrichtung nach Anspruch 2, wobei die Steuereinrichtung dazu eingerichtet ist, die historischen Daten des Parameters (Hz), der während der Verwendung durch die zweite Sensoreinrichtung (9) gemessen wird, zu empfangen und zu speichern, und wenn der gemessene Wert des Parameters (Hz) geringer ist als der zweite Referenzwert (Hz') oder ein Wert, der aus dem zweiten Referenzwert (Hz') berechenbar ist, die Operation der Berechnung einer erwarteten Zeit, in der der Parameterwert (Hz) gleich dem zweiten Referenzwert (Hz') oder einem aus dem zweiten Referenzwert (Hz') berechenbaren Wert ist, auf der Basis zumindest eines Teils der historischen Daten durchzuführen.

4. Vorrichtung nach einem der vorangehenden Ansprüche, wobei die Operation des Emittierens eines Signals das Emittieren eines Signals, das eine für das Filtermedium (6) durchzuführende Reinigung angibt, wenn der gemessene Wert der Druckdifferenz (ΔP) größer ist als der erste Referenzwert (ΔP') oder ein Wert, der aus dem ersten Referenzwert (ΔP') berechenbar ist, umfasst.

5. Vorrichtung nach Anspruch 4, wobei die Steuereinrichtung dazu eingerichtet ist, historische Daten der Druckdifferenz (ΔP), die während der Verwendung periodisch durch die erste Sensoreinrichtung (8) gemessen wird, zu empfangen und zu speichern, und wenn der gemessene Wert der Druckdifferenz (ΔP) geringer ist als der erste Referenzwert (ΔP') oder ein Wert, der aus dem ersten Referenzwert (ΔP') berechenbar ist, die Operation der Berechnung einer erwarteten Zeit, in der der Druckdifferenzwert (ΔP) gleich dem ersten Referenzwert (ΔP') oder einem Wert ist, der aus dem ersten Referenzwert (ΔP') berechenbar ist, auf der Basis zumindest eines Teils der historischen Daten durchzuführen.

6. Vorrichtung nach einem der vorangehenden Ansprüche, wobei der Speicher jedem Gasströmungswert zugeordnet einen Maximalwert (ΔPmax) oder einen Wert eines verstopften Filters und einen Minimalwert (ΔPmin) oder Wert eines sauberen Filters der Druckdifferenz zwischen der gereinigten Seite und der verunreinigten Seite enthält, wobei die Steuereinrichtung dazu eingerichtet ist, die Operationen des Vergleichens des Werts der Druckdifferenz (ΔP), die durch die erste Sensoreinrichtung (8) bestimmt wird, mit dem Maximalwert (ΔPmax) und mit dem Minimalwert (ΔPmin) durchzuführen und auf der Basis des Vergleichs eine erwartete Zeit zu bestimmen, in der der Wert der Druckdifferenz (ΔPmax) gleich oder nahe dem Maximalwert (ΔPmax) ist.

7. Vorrichtung nach einem der vorangehenden Ansprüche, wobei der Speicher jedem Gasströmungswert zugeordnet einen Maximalwert (Hzmax) oder Wert eines verstopften Filters und einen Minimalwert (Hzmin) oder Wert eines sauberen Filters des Parameters, der die Leistung angibt, die durch die Gebläseeinrichtung (7) verwendet wird, enthält, wobei die Steuereinrichtung dazu eingerichtet ist, die Operationen des Vergleichs des Werts des Parameters (Hz), der durch die zweite Sensoreinrichtung (9) bestimmt wird, mit dem Maximalwert (Hzmax) und mit dem Minimalwert (Hzmin) durchzuführen und auf der Basis des Vergleichs eine erwartete Zeit zu bestimmen, in der der Wert des Parameters (Hz) gleich oder nahe dem Maximalwert (Hzmax) ist.

8. Vorrichtung nach einem der vorangehenden Ansprüche, wobei:
- die erste Sensoreinrichtung (8) mindestens einen Druckwandler, der auf der gereinigten Seite angeordnet ist, und/oder mindestens einen Druckwandler, der auf der verunreinigten Seite angeordnet ist, umfasst; und/oder
- die zweite Sensoreinrichtung (9) eine Einrichtung zum Messen der durch die Gebläseeinrichtung (7) verwendeten Leistung und/oder der Frequenz (Hz) oder der Drehzahl eines rotierenden Betriebselements der Gebläseeinrichtung (7) umfasst; und/oder
- die dritte Sensoreinrichtung (10) mindestens einen Durchflussmesser und/oder eine Einrichtung zum Messen der Geschwindigkeit einer Gasströmung umfasst.

9. Anlage zum Entfeuchten von unzusammenhängendem Kunststoff mit mindestens einer Entfeuchtungsvorrichtung (2), die angeordnet ist, um ein Prozessgas zu entfeuchten und das entfeuchtete Prozessgas zu mindestens einem Behälter zuzuführen, in dem der unzusammenhängende Kunststoff entfeuchtet wird, und mindestens einer Filtrationsvorrichtung (5), die angeordnet ist, um ein gefiltertes Prozessgas zu der Entfeuchtungsvorrichtung (2) zuzuführen, **dadurch gekennzeichnet, dass** die Filtrationsvorrichtung (5) nach einem der vorangehenden Ansprüche hergestellt ist.

10. Filtrationsverfahren mit den Schritten:
- Erzeugen einer Gasströmung durch ein Filtermedium (6) hindurch von einer verunreinigten Seite zu einer gereinigten Seite durch eine Gebläseeinrichtung (7);
- Messen mindestens einer Druckdifferenz (ΔP) zwischen der gereinigten Seite und der verunreinigten Seite und/oder Messen mindestens eines Parameters (Hz), der eine Leistung angibt, die durch die Gebläseeinrichtung (7) verwendet wird, um die Gasströmung zu erzeugen;
- Messen mindestens einer Gasströmung (Q), die durch die Gebläseeinrichtung (7) erzeugt wird;
- Bereitstellen einer Vielzahl von Werten der Gasströmung durch das Filtermedium (6) hindurch und jedem Wert der Gasströmung zugeordnet mindestens eines ersten Referenzwerts der Druckdifferenz zwischen der gereinigten Seite und der verunreinigten Seite und/oder mindestens eines zweiten Referenzwerts des Parameters, der die durch die Gebläseeinrichtung (7) verwendete Leistung angibt;
- Zuordnen eines ersten Referenzwerts (ΔP'i) und/oder eines zweiten Referenzwerts (Hz'i) zu dem gemessenen Wert der Gasströmung (Qi);
- Durchführen mindestens eines ersten Vergleichs zwischen dem Wert der gemessenen Druckdifferenz (ΔP) und dem ersten Referenzwert (ΔP'i) und/oder mindestens eines zweiten Vergleichs zwischen dem Wert des gemessenen Parameters (Hz) und dem zweiten Referenzwert (Hz');
- Emittieren eines Signals, das den Zustand des Filtermediums (6) angibt, auf der Basis des ersten Vergleichs und/oder des zweiten Vergleichs.

11. Verfahren nach Anspruch 10, wobei der Schritt des Emittierens eines Signals das Emittieren eines Signals, das eine für das Filtermedium (6) durchzuführende Reinigung angibt, wenn der gemessene Wert des Parameters (Hz) höher ist als der zweite Referenzwert (Hz') oder ein Wert, der aus dem zweiten Referenzwert (Hz') berechenbar ist, umfasst.

12. Verfahren nach Anspruch 10 oder 11 mit den Schritten des Empfangens der historischen Daten des Parameters (Hz), der periodisch während der Verwendung des Filtermediums (6) gemessen wird, des Speicherns der historischen Daten und, wenn der gemessene Wert des Parameters (Hz) geringer ist als der zweite Referenzwert (Hz') oder ein Wert, der aus dem zweiten Referenzwert (Hz') berechenbar ist, des Berechnens einer erwarteten Zeit, in der der Parameter (Hz) gleich dem zweiten Referenzwert (Hz') oder einem Wert ist, der aus dem zweiten Referenzwert (Hz') berechenbar ist, auf der Basis zumindest eines Teils der historischen Daten.

13. Verfahren nach einem der Ansprüche 10 bis 12, wobei der Schritt des Emittierens eines Signals das Emittieren eines Signals, das eine für das Filtermedium (6) auszuführende Reinigung angibt, wenn der gemessene Wert der Druckdifferenz (ΔP) höher ist als der erste Referenzwert (ΔP') oder ein Wert, der aus dem ersten Referenzwert (ΔP') berechenbar ist, umfasst.

14. Verfahren nach einem der Ansprüche 10 bis 13 mit den Schritten des Empfangens der historischen Daten der Druckdifferenz (ΔP), die periodisch während der Verwendung des Filtermediums (6) gemessen wird, des Speicherns der historischen Daten und, wenn der gemessene Wert der Druckdifferenz (ΔP) geringer ist als der erste Referenzwert (ΔP') oder ein Wert, der aus dem ersten Referenzwert (ΔP') berechenbar ist, des Berechnens einer erwarteten Zeit, in der der Differenzwertdruck (ΔP) gleich dem ersten Referenzwert (ΔP') oder einem Wert ist, der aus dem ersten Referenzwert (ΔP') berechenbar ist, auf der Basis zumindest eines Teils der historischen Daten.

## Revendications

1. Appareil de filtration (5) comprenant :
- au moins un médium filtrant (6) pour purifier un gaz de particules solides en suspension, ledit médium filtrant (6) comprenant au moins un côté contaminé et au moins un côté purifié ;
- des moyens ventilateurs (7) configurés pour générer un écoulement de gaz à travers ledit médium filtrant (6) ;
- de premiers moyens capteurs (8) pour déterminer au moins une différence de pression (ΔP) entre ledit côté purifié et ledit côté contaminé, et/ou de deuxièmes moyens capteurs (9) pour déterminer au moins un paramètre (Hz) indiquant une puissance utilisée par lesdits moyens ventilateurs (7) pour générer l'écoulement de gaz à travers l'médium filtrant (6) ;
- de troisièmes moyens capteurs (10) pour déterminer au moins un écoulement de gaz (Q) généré à travers ledit médium filtrant (6) par lesdits moyens ventilateurs (7) ;
**caractérisé en ce qu'il comprend :**
- au moins une mémoire contenant au moins une base de données (11) contenant une pluralité de valeurs d'écoulement de gaz à travers ledit médium filtrant (6) et, associées à chaque valeur d'écoulement de gaz, au moins une première valeur de référence (ΔP') de ladite différence de pression et/au moins une deuxième valeur de référence (Hz') dudit paramètre ;
- des moyens de commande électroniques reliés à ladite base de données (11) et configurés pour effectuer les opérations suivantes :
* recevoir des valeurs mesurées desdits premiers et/ou deuxièmes et troisièmes moyens capteurs (8 ; 9 ; 10) ;
* associer la valeur d'écoulement de gaz (Q) déterminée par lesdits troisièmes moyens capteurs (10) à une première valeur de référence (ΔP') et/ou à une deuxième valeur de référence (Hz') selon ladite base de données (11) ;
* faire au moins une première comparaison entre la valeur de la différence de pression (ΔP) déterminée par lesdits premiers moyens capteurs (8) et ladite première valeur de référence (ΔP') et/ou au moins une deuxième comparaison entre la valeur du paramètre (Hz) déterminée par lesdits deuxièmes moyens capteurs (9) et ladite deuxième valeur de référence (Hz'),
* émettre un signal indiquant l'état dudit médium filtrant (6) sur la base de ladite première comparaison et/ou de ladite deuxième comparaison.

2. Appareil selon la revendication 1, dans lequel ladite opération d'émettre un signal comprend émettre un signal indiquant un nettoyage à effectuer pour ledit médium filtrant (6) si ladite valeur mesurée du paramètre (Hz) est plus élevée que ladite deuxième valeur de référence (Hz') ou qu'à une valeur calculable à partir de ladite deuxième valeur de référence (Hz').

3. Appareil selon la revendication 2, dans lequel lesdits moyens de commande sont configurés pour recevoir et stocker les données historiques du paramètre (Hz) mesuré par lesdits deuxièmes moyens capteurs (9) pendant l'utilisation, et, si ladite valeur mesurée du paramètre (Hz) est plus basse que ladite deuxième valeur de référence (Hz') ou une valeur calculable à partir de ladite deuxième valeur de référence (Hz'), pour effectuer l'opération de calculer, sur la base d'une partie au moins desdites données historiques, un temps escompté pendant lequel la valeur de paramètre (Hz) sera égale à ladite deuxième valeur de référence (Hz') ou à une valeur calculable à partir de ladite deuxième valeur de référence (Hz').

4. Appareil selon l'une quelconque des revendications précédentes, dans lequel ladite opération d'émettre un signal comprend émettre un signal indiquant un nettoyage à effectuer pour ledit médium filtrant (6) si ladite valeur mesurée de la différence de pression (ΔP) est supérieure à ladite première valeur de référence (ΔP') ou à une valeur calculable à partir de ladite première valeur de référence (ΔP').

5. Appareil selon la revendication 4, dans lequel lesdits moyens de commande sont configurés pour recevoir et stocker des données historiques de la différence de pression (ΔP) mesurée périodiquement par lesdits premiers moyens capteurs (8) pendant l'utilisation, et, si ladite valeur mesurée de la différence de pression (ΔP) est inférieure à ladite première valeur de référence (ΔP') ou à une valeur calculable à partir de la première valeur de référence (ΔP'), pour effectuer l'opération de calcul, sur la base d'une partie au moins desdites données historiques, d'un temps escompté pendant lequel ladite valeur de différence de pression (ΔP) sera égale à ladite première valeur de référence (ΔP') ou à une valeur calculable à partir de ladite première valeur de référence (ΔP').

6. Appareil selon l'une quelconque des revendications précédentes, dans lequel ladite mémoire contient, associées à chaque valeur d'écoulement de gaz, une valeur maximum (ΔPmax), ou valeur de filtre colmaté, et une valeur minimum (ΔPmin), ou valeur de filtre propre, de la différence de pression entre ledit côté purifié et ledit côté contaminé, lesdits moyens de commande étant configurés pour effectuer les opérations de comparer la valeur de la différence de pression (ΔP) déterminée par lesdits premiers moyens capteurs (8) à ladite valeur maximum (ΔPmax) et à ladite valeur minimum (ΔPmin), et pour déterminer, sur la base de ladite comparaison, un temps escompté pendant lequel ladite valeur de la différence de pression (ΔPmax) sera égale à ladite valeur maximum (ΔPmax) ou proche de celle-ci.

7. Appareil selon l'une quelconque des revendications précédentes, dans lequel ladite mémoire contient, associées à chaque valeur d'écoulement de gaz, une valeur maximum (Hzmax), ou valeur de filtre colmaté, et une valeur minimum (Hzmin), ou valeur de filtre propre, du paramètre indiquant la puissance utilisée par lesdits moyens ventilateurs (7), lesdits moyens de commande étant configurés pour effectuer les opérations de comparer la valeur du paramètre (Hz) déterminée par lesdits deuxièmes moyens capteurs (9) à ladite valeur maximum (Hzmax) et à ladite valeur minimum (Hzmin), et pour déterminer, sur la base de ladite comparaison, un temps escompté pendant lequel ladite valeur du paramètre (Hz) sera égale à ladite valeur maximum (Hzmax) ou proche de celle-ci.

8. Appareil selon l'une quelconque des revendications précédentes, dans lequel :
- lesdits premiers moyens capteurs (8) comprennent au moins un transducteur de pression arrangé dudit côté purifié et/ou au moins un transducteur de pression arrangé dudit côté contaminé ; et/ou
- lesdits deuxièmes moyens capteurs (9) comprennent des moyens pour mesurer la puissance utilisée par lesdits moyens ventilateurs (7) et/ou la fréquence (Hz) ou la vitesse de rotation d'un organe d'opération de rotation desdits moyens ventilateurs (7) ; et/ou
- lesdits troisièmes moyens capteurs (10) comprennent au moins un débitmètre et/ou des moyens pour mesurer la vitesse d'un écoulement de gaz.

9. Installation pour déshumidifier des matières plastiques incohérentes, comprenant au moins un appareil de déshumidification (2) arrangé pour déshumidifier un gaz de traitement et pour amener le gaz de traitement déshumidifié à au moins un contenant où les matières plastiques incohérentes sont déshumidifiées, et au moins un appareil de filtration (5) arrangé pour amener un gaz de traitement filtré audit appareil de déshumidification (2), **caractérisée en ce que** l'appareil de filtration (5) est fait selon l'une quelconque des revendications précédentes.

10. Procédé de filtration comprenant les étapes de :
- générer un écoulement de gaz à travers un médium filtrant (6) d'un côté contaminé à un côté purifié, par des moyens ventilateurs (7)
- mesurer au moins une différence de pression (ΔP) entre ledit côté purifié et ledit côté contaminé et/ou mesurer au moins un paramètre (Hz) indiquant une puissance utilisée par lesdits moyens ventilateurs (7) pour générer l'écoulement de gaz ;
- mesurer au moins un écoulement de gaz (Q) généré par lesdits moyens ventilateurs (7) ;
- fournir une pluralité de valeurs de l'écoulement de gaz à travers ledit médium filtrant (6) et, associées à chaque valeur de l'écoulement de gaz, au moins une première valeur de référence de la différence de pression entre ledit côté purifié et ledit côté contaminé et/ou au moins une deuxième valeur de référence du paramètre indiquant la puissance utilisée par lesdits moyens ventilateurs (7) ;
- associer une première valeur de référence (ΔP'i) et/ou une deuxième valeur de référence (Hz'i) à la valeur mesurée de l'écoulement de gaz (Qi) ;
- effectuer au moins une première comparaison entre la valeur de la différence de pression (ΔP) mesurée et ladite première valeur de référence (ΔP'i) et/ou au moins une deuxième comparaison entre la valeur du paramètre (Hz) mesurée et ladite deuxième valeur de référence (Hz') ;
- émettre un signal indiquant l'état dudit médium filtrant (6) sur la base de ladite première comparaison et/ou de ladite deuxième comparaison.

11. Procédé selon la revendication 10, dans lequel ladite étape d'émettre un signal comprend émettre un signal indiquant un nettoyage à effectuer pour ledit médium filtrant (6) si ladite valeur mesurée du paramètre (Hz) est plus élevée que ladite deuxième valeur de référence (Hz') ou qu'une valeur calculable à partir de ladite deuxième valeur de référence (Hz').

12. Procédé selon la revendication 10 ou 11, comprenant les étapes de recevoir les données historiques du paramètre (Hz) mesuré périodiquement pendant l'utilisation dudit médium filtrant (6), stocker lesdites données historiques si ladite valeur mesurée du paramètre (Hz) est inférieure à ladite deuxième valeur de référence (Hz') ou à une valeur calculable à partir de ladite valeur de référence (Hz'), calculer, sur la base d'une partie desdites données historiques, un temps escompté pendant lequel la valeur de paramètre (Hz) sera égale à ladite deuxième valeur de référence (Hz') ou à une valeur calculable à partir de ladite deuxième valeur de référence (Hz').

13. Procédé selon l'une quelconque des revendications 10 à 12, dans lequel l'étape d'émettre un signal comprend émettre un signal indiquant un nettoyage à effectuer pour ledit médium filtrant (6) si ladite valeur mesurée de la différence de pression (ΔP) est plus élevée que ladite première valeur de référence (ΔP') ou qu'une valeur calculable à partir de ladite première valeur de référence (ΔP').

14. Procédé selon l'une quelconque des revendications 10 à 13, comprenant les étapes de recevoir les données historiques de la différence de pression (ΔP) mesurée périodiquement pendant l'utilisation dudit médium filtrant (6), stocker lesdites données historiques et, si ladite valeur mesurée de la différence de pression (ΔP) est inférieure à ladite première valeur de référence (ΔP') ou à une valeur calculable à partir de la première valeur de référence (ΔP'), calculer, sur la base d'une partie au moins desdites données historiques, un temps escompté pendant lequel ladite valeur de différence de pression (ΔP) sera égale à ladite première valeur de référence (ΔP') ou à une valeur calculable à partir de ladite première valeur de référence (ΔP').
